# EUROPEAN PATENT SPECIFICATION

(11) **EP 4 029 767 B1**
(45) Date of publication and mention of the grant of the patent: **19.02.2025**
(21) Application number: 21152397.2
(22) Date of filing: 19.01.2021
(51) Int. Cl.: B62D 55/088, B62D 55/10, B62D 55/15, B62D 55/24, B62D 55/30

(54) **CRAWLER DRIVING DEVICE**
RAUPENANTRIEBSVORRICHTUNG
DISPOSITIF D'ENTRAÎNEMENT À CHENILLE

(43) Date of publication of application: 20.07.2022
(73) Proprietor: Heilongjiang Zhongxing Machinery Equipment Co., Ltd., Jiamusi (CN)
(72) Inventor: YAN, Shengmin, Xiang Yang Jiamusi (CN); ZHANG, Shanshan, Xiang Yang Jiamusi (CN); HUI, Yujie, Xiang Yang Jiamusi (CN); ZHANG, Xin, Xiang Yang Jiamusi (CN)
(74) Representative: Zaboliene, Reda

(56) References cited:
- WO-A2-2017/139356
- US-A1- 2018 118 262
- US-A1- 2019 126 980

## Description

### BACKGROUND OF THE INVENTION

The invention belongs to the technology field of agriculture machinery equipment, in particular to a crawler driving device.

Track is a kind of traditional driving device, with history of more than 200 years since its invention. As excellent traction ability, mobility and stability, it is still a basic form of driving device. At present, the crawler driving device is not only used in agriculture tractor, but also mainly used in rice harvester, military vehicles, construction machinery, etc.

The traditional crawler driving device has the following drawbacks: the roller set is a two-row structure, with a high pressure on each roller wheel and poor stability of the overall structure ; The rubber track structure is relatively simple, single-tooth structure located in the middle of the rubber track, easy to cause uneven force on the both sides, thus causing damage to the track; the roller wheels are fixed on the track bracket, where there is an obstacle on the ground, the roller wheels bump transmit the impact force received to the machine body, thus causing the machine shake and uncomfortable to driver.
WO2017/139356 disclosed a kind of track systems for traction of a vehicle in which a spacing of laterally-adjacent ones of the track systems in a widthwise direction of the vehicle is adjustable. This may facilitate use of the vehicle in different conditions. For instance, the spacing of the laterally-adjacent ones of the track systems may be adjustable while the laterally-adjacent ones of the track systems are connected to a power train of the vehicle and/or without requiring use of additional parts such as spacers.

### BRIEF SUMMARY OF THE INVENTION

The invention provides a crawler driving device, to solve these problems that mentioned in the above background technology, these problems respectively are the high pressure on roller wheel, uneven pressure on rubber track, and causes the machine body's shake.

The technical problems solved by the invention are realized by the following technical solutions:

A crawler driving device, includes a main frame, a driving wheel that is rotationally set over the main frame, idler wheels that are rotationally set at both ends of the main frame, couple of roller wheels that are fixed under the main frame at intervals along a driving direction of the crawler driving device, and a track that is set at the outside of the driving wheel, the idler wheels and the roller wheels. wherein, the main frame includes a beam, V-shaped brackets that are linked with both sides of the beam respectively, a connecting rod that is connected to the both V-shaped brackets, a space is formed by the V-shaped brackets to accommodate the driving wheel; the idler wheels include guide rods that are set at both ends of the beam respectively, a rotating shaft that is set at the end of each of the guide rods, and the idler wheels are mounted on the both sides of the rotating shaft. Each roller wheel includes a mechanical balancer, roller wheels that are rotationally connected with both ends of the mechanical balancer, a center position of the mechanical balancer being rotatably connected with the bottom of the beam. Teeth that are set on the inner wall of the track engageable with the driving wheel, the roller wheels enable the rubber track to move.

A pin is configured to link the middle position of the both sides of the beam with the bottom of the V-shaped brackets.

Preferably, restriction plates are set in the middle position of the both sides of the beam to limit the swing angle of the V-shaped brackets.

Preferably, the idler wheels are rotationally set at the two ends of the beam and support the rubber track, the idler wheels including a front idler wheel and a rear idler wheel.

Preferably, the mechanical balancer is rotationally installed at the bottom of the both ends of the beam by a pin.

Further preferably, the mechanical balancer includes a plate, an upper bearing seat that is assembled at the bottom of the both ends of the plate, a lower bearing seat which is used with the upper bearing seat together and form a through-hole between the upper and the lower bearing seats, the through-hole being used for inserting a rotating shaft, and the roller wheels being assembled at the both sides of the rotating shaft.

Preferably, the teeth are arranged in three rows, and are set on the inner wall of the rubber track, the three rows of teeth are respectively first row teeth, second row teeth, and third row teeth.

Further preferably, some teeth that are used for mud cleaning are set at the both sides of the inner wall of the rubber track.

Preferably, the crawler driving device further includes a tension mechanism, the tension mechanism including a hydro-cylinder mounted on the connecting rod over the front idler wheel, and tensioning wheels rotationally linked with the hydro-cylinder.

The beneficial effects of the invention are:
1.The invention is mainly applied to the ground with poor operating condition, which increasing ground contact area, not only effectively prevent machine's subsidence, but also protect the field from damage.
2.The three-row teeth track structure in the invention deliver uniformly force on track and thus prolong the rubber track's life.
3.The roller wheels, idler wheels and tensioners in the invention all adopt four-row wheels structure, lowering the pressure on the each wheel and greatly improve the overall stability of the equipment.
4.The balancing structure of the roller wheels in the invention, absorbing vibration when the crawler driving device run into the obstacles , and thus ensuring the machine's smoothly driving.
5.The track in the invention is made of rubber , and has the advantages of stable moving, low noise and economic fuel consumption.
6.The double tensioning structure in the invention take advantage of even force distribution and more reliable.

### BRIEF DESCRIPTION OF THE DRAWINGS

FIG.1 the layout drawing of the overall structure of the invention
FIG.2 the structural layout drawing without rubber track of the invention
FIG.3 the top view of the connection between the main frame and the roller wheels
FIG.4 the 3D of the main frame in the invention
FIG.5 the structural drawing of the roller wheels in the invention
FIG.6 the structural drawing of the mechanical balancer in the invention
FIG.7 the drawing of the inside of rubber track in the invention
FIG.8 the structural drawing of the tensioning mechanism in the invention

Wherein, 10-the main frame 11-beam 12-V-shaped brackets 13-connecting rod
14-restriction plate 15-fixed plate 17-connecting bracket 20-driving wheel
21-rotating fluted disc 22-side plate 23-rorating disc 24-connecting bar
30-Idler wheels 301-front idler wheel 302-rear idler wheel
31-guide rod 32-the first rotating shaft 33-Idler wheel 40-Roller set
41-Mechanical balancer 411-plate 412-upper bearing seat 413-lower bearing seat
414-the third through hole 415-the fourth through hole 42-Roller wheel 50-track 51-teeth 511-the first row teeth 512 -the second row teeth 513-the third row teeth 52- tooth that used for mud cleaning 60-tension mechanism 61-Hydro-cylinder 62-tensioning wheels 63-supporting bracket 70-pin

### DETAILED DESCRIPTION OF THE INVENTION

In order to further explain the technical solutions of the invention, the following is a detailed elaboration of the invention through specific embodiments.

It should be noted that in the embodiments "both sides" is the left and right directions along the driving direction of the crawler driving device, "both ends" is the front and rear directions along the driving direction of the crawler driving device.

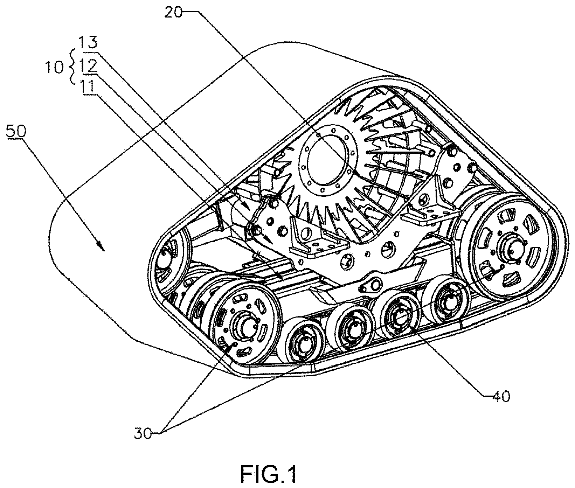

As shown in FIG.1-8, the invention relates to a crawler driving device, includes the main frame 10, driving wheel 20, idler wheels 30, roller wheels 40, track 50 and tensioning mechanism 60

As shown in FIG.1, the driving wheel 20 rotationally set over the main frame 10 and contact with track 50, and the driving wheel 20 is over the middle position of the main frame along the front and rear directions of the crawler driving device, the idler wheels 30 mounted on the both ends of the main frame 10, couple of roller wheels 40 installed under the both sides of frame body along the driving direction of the crawler driving device, rubber track 50 set at the outside of the driving wheel 20 idler wheels 30 roller wheels 40and tensioning mechanism 60, the teeth on the inner wall of the rubber track 50 engage with driving wheel 20, enabling driving wheel drive rubber track to move .

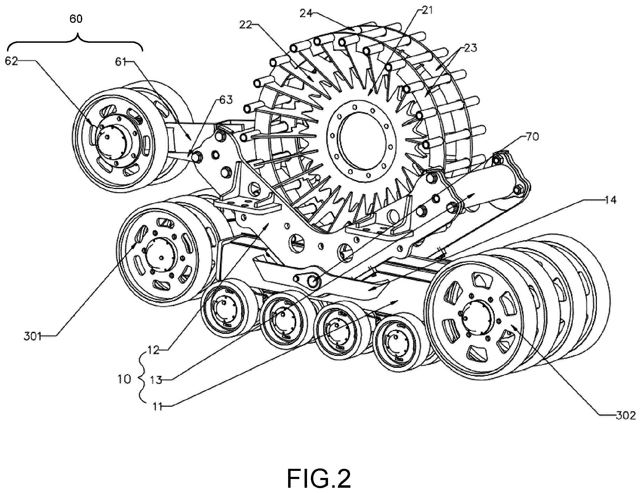

As shown in FIG.2, described main frame 10 includes beam 11, V-shaped brackets 12 that linked with the both sides of the beam 11 respectively, connecting rod 13 that connected the top of the one V-shaped bracket 12 with the top of the other V-shaped bracket 12; the space that is formed by V-shaped brackets (12) is used to accommodate the driving wheel 20; linking the middle position of the both sides of the beam 11 with the bottom of V-shaped brackets 12 by pin 70.

Setting restriction plate 14 in the middle position of the both sides of beam 11 in order to limit the swing angle of the V-shaped brackets 12.

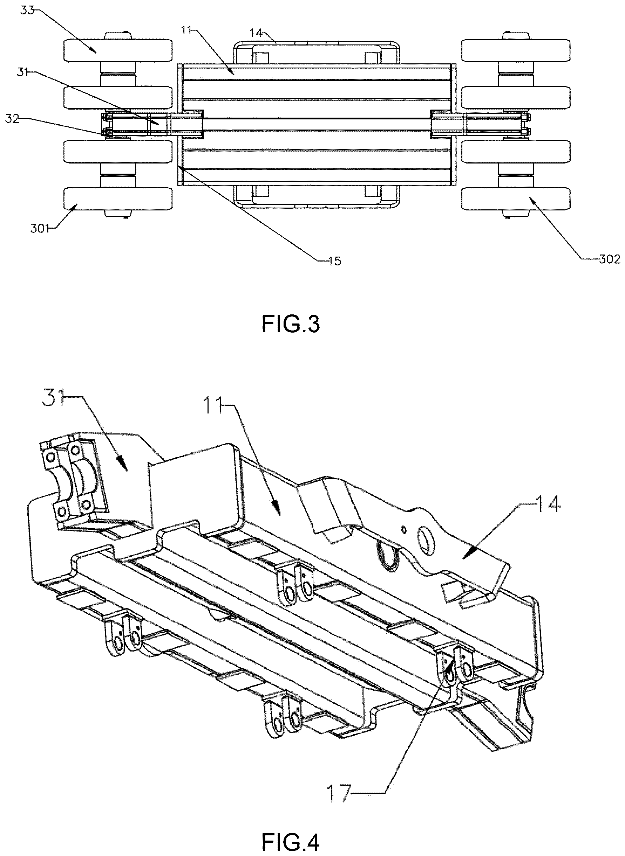

As shown in FIG.4, the beam 11 is composed of three same supporting plates that set at intervals, the both ends of the three supporting plates respectively fixed with plate 15 into a whole ,connecting bracket 17 that connect with the thrust wheel groups 40 is set at the bottom of supporting plates (As shown in FIG.3)

As shown in FIG.2, the driving wheel 20 includes the rotating fluted disc 21 the side plate 22 the rotating disc 23 the connection bar 24.

The side plate 22 uniformly distributed and inserted in the teeth of the rotating fluted disc 21, the rectangular notch at the bottom of the side plate 22 stuck out the center of the teeth and perpendicular to the teeth, two rotating disc 23 separately insert in the symmetrical notch at top of the side plate 22, the rotating disc 23 is perpendicular to the side plate 22 and parallel to the rotating fluted disc 21, and the center of two rotating disc is coincident , some holes uniformly set on the two rotating discs 23 and the position of holes in the two rotating disc is same , the connection bar 24 respectively inserted in the corresponding holes of the two rotating discs 23, when walking device works, the connection bar 24 drive the teeth 51 of the inner wall of track 50, thus drive track 50 to walk .

As shown in FIG.3, the idler wheels 30 include guide rod 31 mounted on fixed plate 15 , the other end of guide rod 31 rotating connect with the first rotating shaft 32, the both sides of the first rotating shaft 32 separately connect with two idler wheels 33.

The idler wheels in the invention is composed of the front idler wheel 301 and the rear idler wheel 302, separately assembled at the front and rear of the beam 11.

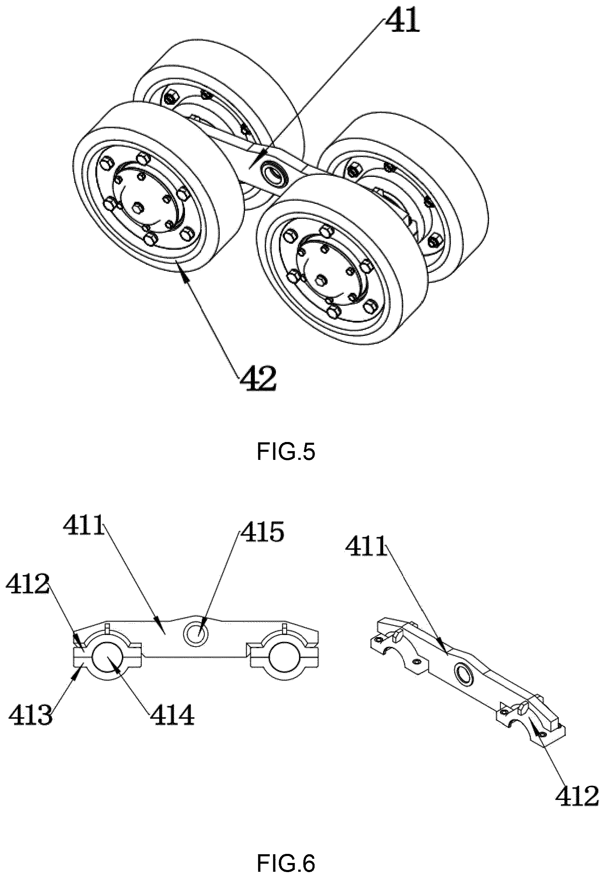

As shown in FIG.2 FIG.5 FIG.6, there are 4 roller wheel sets, separately rotationally assembled at the bottom of the both sides of the main frame by pin 70, each roller wheel 40 includes mechanical balancer 41, the roller wheel 42 rotating connect with the both ends of the mechanical balancer 41.

As shown in FIG.6, the mechanical balancer 41 includes the plate 411, the upper bearing seat 412 that assembled at the bottom of the both ends of the plates 411, the lower bearing seat 413 that using with upper bearing seat together and form a through-hole 414 between the upper bearing seat and the lower bearing seat , the through-hole 414 used for inserting the second rotating shaft (not show in picture), and the roller wheels 42 assembled at the both sides of the second rotating shaft, and the roller wheels 42 is at the both sides of the plates 411.

Setting the fourth through hole 415 at the top of the middle of the plate 411 , which link with the connecting bracket 17 by pin 70.

There are 4 roller wheels 42 for each roller set in the invention.

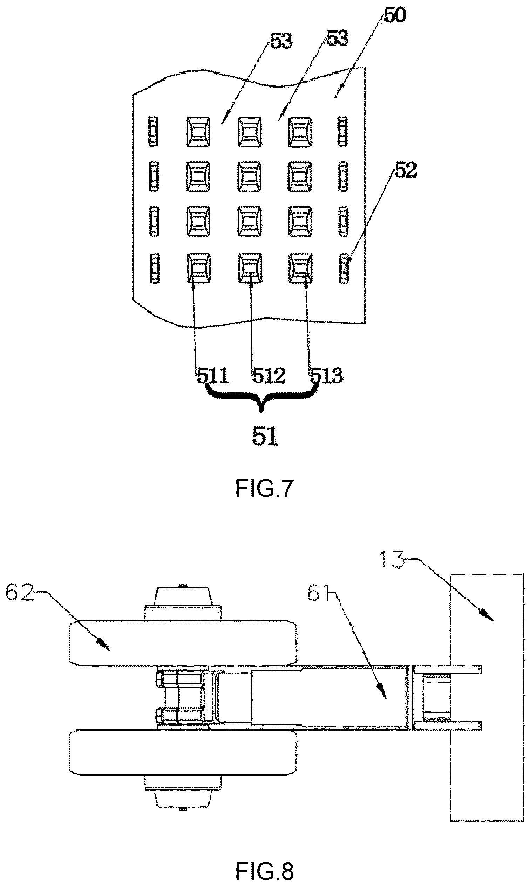

As shown in FIG.7, the teeth 51 uniformly distributed on the inner wall of the track 50, Set 3 rows teeth 51 on the inner wall of the rubber track 50, respectively are the first row teeth 511, the second row teeth 512, the third row teeth 513; the driving device works, the teeth 51 engage with the driving wheel 20, the driving wheel 20 drive the 3 rows teeth 51 and then the track 50 to rotate, the design of 3 rows teeth 51 make more even force on the track, and effectively improve the force distribution on track 50, and prolong the rubber track 50 life.

There are same interval space 53 during 3 rows teeth, the interval space 53 can accommodate the two middle wheels of the idler wheels 30 the roller wheels 40 and the tensioners 60

Setting some teeth 52 at the two ends of the inner wall of the rubber track 50, and distributed at same interval, the shape of tooth 52 is similar to pyramid make the mud to easily drop from the track 50 and thus achieve the effect of cleaning.

As shown in FIG.2 FIG.8, the tension mechanism 60 includes hydro-cylinder 61, tension wheel group 62, the one end of the hydro-cylinder 61 fixed on the connection rod 13 by supporting bracket 63, the other end link with tensioned 62 by pin.

### The implement process of the invention

The V-shaped bracket 12, driving wheel 20 is installed on driving axle of the machine, when the driving axle turn, the driving wheel move as well, driving wheel 20 engage with the teeth of inner wall of the rubber track, thereby drive track 50 to move, the roller set swing up and down during moving, and also supporting frame for the crawler driving device. The roller wheel at the both sides of the main frame can swing up and down with taking the rotating shaft 416 in the middle of the oscillating deck as fulcrum. when the crawler driving device run into obstacles, the four roller wheel sets at the both ends of the mechanical balancer buffers force synchronously, thus ensure smoothly drive. the idler wheels mainly play guiding role, the tension mechanism achieves tensioning adjustment between track and wheel groups under the action of the hydro-cylinder.

The above embodiments of the invention are described in detail, but the contents are only the better embodiments of the invention and should not be considered as limiting the scope of implementation of the invention, which is defined only by the appended claims.

## Claims

1. A crawler driving device including a main frame (10), a driving wheel (20) that is rotationally set over the main frame (10), idler wheels (30) that are rotationally set at both ends of the main frame (10), couple of roller wheels (40) that are fixed under the main frame (10) at intervals along a driving direction of the crawler driving device, and a track (50) that is set at the outside of the driving wheel (20), the idler wheels (30) and the roller wheels (40);
the main frame (10) includes a beam (11), V-shaped brackets (12) that are linked with both sides of the beam (11) respectively, a connecting rod (13) that is connected to the both V-shaped brackets (12); a space is formed by the V-shaped brackets (12) to accommodate the driving wheel (20);
the idler wheels (30) include guide rods (31) that are set at both ends of the beam (11) respectively, a rotating shaft (32) that is set at the end of each of the guide rods (31), and the idler wheels (33) are set at both sides of the rotating shaft (32);
each roller wheel (40) includes a mechanical balancer (41), roller wheels (42) that are rotationally connected with both ends of the mechanical balancer (41), a center position of the mechanical balancer (41) being rotatably connected with the bottom of the beam (11);
teeth (51) that are set on the inner wall of the track (50) engageable with the driving wheel (20), the roller wheels (42) enabling the rubber track (50) to move; **characterized in that**:
a pin (70) is configured to link the middle position of the both sides of the beam (11) with the bottom of the V-shaped brackets (12).

2. The crawler driving device according to claim 1, **characterized in that** restriction plates (14) are set in the middle position of the both sides of the beam (11) to limit the swing angle of the V-shaped brackets (12).

3. The crawler driving device according to claim 1, **characterized in that** the idler wheels (30) are rotationally set at the both ends of the beam (11) and support the rubber track (50), the idler wheels (30) including a front idler wheel (301) and a rear idler wheel (302).

4. The crawler driving device according to claim 1, **characterized in that** the mechanical balancer (41) is rotationally installed under the both ends of the beam (11) by a pin.

5. The crawler driving device according to claim 4, **characterized in that** the mechanical balancer (41) includes a plate (411), an upper bearing seat (412) that is assembled at the bottom of both ends of the plate (411), a lower bearing seat (413) that is used with the upper bearing seat (411) together and form a through-hole (414) between the upper bearing seat (412) and the lower bearing seat (413), the through-hole (414) being used for inserting a rotating shaft, and the roller wheels (42) being assembled at the two sides of the rotating shaft.

6. The crawler driving device according to claim 1, **characterized in that** the teeth (51) are arranged in three rows, and are set on the inner wall of the rubber track (50), the three rows of teeth (51) are respectively first row teeth (511), second row teeth (512), and third row teeth (513).

7. The crawler driving device according to claim 6, **characterized in that** some teeth that are used for mud cleaning (52) are set at the both sides of the inner wall of the rubber track (50).

8. The crawler driving device according to claim 3, **characterized in that** the crawler driving device further includes a tension mechanism (60), and the tension mechanism (60) includes a hydro-cylinder (61) mounted on the connecting rod (13) over the front idler wheel (301), and tensioning wheels (62) rotationally linked with the hydro-cylinder (61).

## Patentansprüche

1. Eine Raupenantriebsvorrichtung, die einen Hauptrahmen (10), ein Antriebsrad (20), das drehbar über dem Hauptrahmen (10) angeordnet ist, Leiträder (30), die drehbar an beiden Enden des Hauptrahmens (10) angeordnet sind, ein Paar von Rollenrädern (40), die in Abständen entlang einer Antriebsrichtung der Raupenantriebsvorrichtung unter dem Hauptrahmen (10) befestigt sind, und eine Raupe (50), die an der Außenseite des Antriebsrads (20), der Leiträder (30) und der Rollenräder (40) angeordnet ist;
der Hauptrahmen (10) umfasst einen Balken (11), V-förmige Halterungen (12), die jeweils mit beiden Seiten des Balkens (11) verbunden sind, und eine Verbindungsstange (13), die mit den beiden V-förmigen Halterungen (12) verbunden ist; durch die V-förmigen Halterungen (12) wird ein Raum gebildet, um das Antriebsrad (20) aufzunehmen;
die Leiträder (30) umfassen Führungsstangen (31), die jeweils an beiden Enden des Balkens (11) angebracht sind, eine Drehwelle (32), die am Ende jeder der Führungsstangen (31) angebracht ist, und die Leiträder (33) sind an beiden Seiten der Drehwelle (32) angebracht;
jedes Rollenrad (40) umfasst einen mechanischen Ausgleicher (41), Rollenräder (42), die drehbar mit beiden Enden des mechanischen Ausgleichers (41) verbunden sind, wobei eine Mittelposition des mechanischen Ausgleichers (41) drehbar mit der Unterseite des Balkens (11) verbunden ist;
Zähne (51), die an der Innenwand der Raupe (50) angebracht sind und mit dem Antriebsrad (20) in Eingriff gebracht werden können, wobei die Rollenräder (42) die Bewegung der Gummiraupe (50) ermöglichen;
**dadurch gekennzeichnet, dass**:
Ein Stift (70) ist so konfiguriert, dass er die mittlere Position der beiden Seiten des Balkens (11) mit der Unterseite der V-förmigen Halterungen (12) verbindet.

2. Raupenantriebsvorrichtung nach Anspruch 1, **dadurch gekennzeichnet, dass** in der Mittelposition auf beiden Seiten des Trägers (11) Begrenzungsplatten (14) angebracht sind, um den Schwenkwinkel der V-förmigen Halterungen (12) zu begrenzen.

3. Raupenantriebsvorrichtung nach Anspruch 1, **dadurch gekennzeichnet, dass** die Leiträder (30) drehbar an beiden Enden des Trägers (11) angebracht sind und die Gummikette (50) stützen, wobei die Leiträder (30) ein vorderes Leitrad (301) und ein hinteres Leitrad (302) umfassen.

4. Raupenantriebsvorrichtung nach Anspruch 1, **dadurch gekennzeichnet, dass** der mechanische Ausgleichskörper (41) drehbar unter den beiden Enden des Balkens (11) durch einen Stift installiert ist.

5. Raupenantriebsvorrichtung nach Anspruch 4, **dadurch gekennzeichnet, dass** der mechanische Ausgleicher (41) eine Platte (411), einen oberen Lagersitz (412), der an der Unterseite beider Enden der Platte (411) montiert ist, einen unteren Lagersitz (413), der zusammen mit dem oberen Lagersitz (411) verwendet wird und ein Durchgangsloch (414) zwischen dem oberen Lagersitz (412) und dem unteren Lagersitz (413) bildet, umfasst, wobei das Durchgangsloch (414) zum Einführen einer rotierenden Welle verwendet wird, und die Rollenräder (42), die an den beiden Seiten der rotierenden Welle montiert sind.

6. Raupenantriebsvorrichtung nach Anspruch 1, **dadurch gekennzeichnet, dass** die Zähne (51) in drei Reihen angeordnet sind und an der Innenwand der Gummikette (50) angebracht sind, wobei die drei Zahnreihen (51) jeweils Zähne der ersten Reihe (511), Zähne der zweiten Reihe (512) und Zähne der dritten Reihe (513) sind.

7. Raupenantriebsvorrichtung nach Anspruch 6, **dadurch gekennzeichnet, dass** an beiden Seiten der Innenwand der Gummikette (50) einige Zähne (52) angebracht sind, die zur Schlammreinigung dienen.

8. Raupenantriebsvorrichtung nach Anspruch 3, **dadurch gekennzeichnet, dass** die Raupenantriebsvorrichtung außerdem einen Spannmechanismus (60) umfasst, der einen Hydrozylinder (61) beinhaltet, der an der Verbindungsstange (13) über dem vorderen Leerlaufrad (301) montiert ist, sowie Spannräder (62), die drehfest mit dem Hydrozylinder (61) verbunden sind.

## Revendications

1. Un dispositif d'entraînement à chenilles comprenant un cadre principal (10), une roue motrice (20) placée en rotation au-dessus du cadre principal (10), des roues de renvoi (30) placées en rotation aux deux extrémités du cadre principal (10), un couple de roues à rouleaux (40) fixées sous le cadre principal (10) à intervalles le long d'une direction d'entraînement du dispositif d'entraînement à chenilles, et une chenille (50) placée à l'extérieur de la roue motrice (20), des roues de renvoi (30) et des roues à rouleaux (40) ; le cadre principal (10) comprend une poutre (11), des supports en forme de V (12) qui sont reliés aux deux côtés de la poutre (11) respectivement, une bielle (13) qui est reliée aux deux supports en forme de V (12) ; un espace est formé par les supports en forme de V (12) pour accueillir la roue motrice (20) ;
les roues de renvoi (30) comprennent des tiges de guidage (31) placées respectivement aux deux extrémités de la poutre (11), un arbre rotatif (32) placé à l'extrémité de chacune des tiges de guidage (31), et les roues de renvoi (33) sont placées des deux côtés de l'arbre rotatif (32) ;
chaque roue à rouleaux (40) comprend un équilibreur mécanique (41), des roues à rouleaux (42) qui sont reliées en rotation aux deux extrémités de l'équilibreur mécanique (41), une position centrale de l'équilibreur mécanique (41) étant reliée en rotation au fond de la poutre (11) ;
des dents (51) placées sur la paroi intérieure de la chenille (50) en prise avec la roue motrice (20), les roues à rouleaux (42) permettant à la chenille en caoutchouc (50) de se déplacer ;
**caractérisé par le fait que** :
une goupille (70) est configurée pour relier la position médiane des deux côtés de la poutre (11) à la base des supports en forme de V (12).

2. Le dispositif d'entraînement des chenilles selon la revendication 1, **caractérisé par le fait que** des plaques de restriction (14) sont placées en position médiane des deux côtés de la poutre (11) pour limiter l'angle de pivotement des supports en forme de V (12).

3. Le dispositif d'entraînement de chenilles selon la revendication 1, **caractérisé par le fait que** les roues de renvoi (30) sont placées en rotation aux deux extrémités de la poutre (11) et supportent la chenille en caoutchouc (50), les roues de renvoi (30) comprenant une roue de renvoi avant (301) et une roue de renvoi arrière (302).

4. Le dispositif d'entraînement des chenilles selon la revendication 1, **caractérisé par le fait que** l'équilibreur mécanique (41) est installé en rotation sous les deux extrémités de la poutre (11) par une goupille.

5. Le dispositif d'entraînement de chenilles selon la revendication 4, **caractérisé par le fait que** l'équilibreur mécanique (41) comprend une plaque (411), un siège de roulement supérieur (412) qui est assemblé au bas des deux extrémités de la plaque (411), un siège de roulement inférieur (413) qui est utilisé avec le siège de roulement supérieur (412) et forme un trou de passage (414) entre le siège de roulement supérieur (412) et le siège de roulement inférieur (413), le trou de passage (414) étant utilisé pour insérer un arbre rotatif, et les roues à rouleaux (42) étant assemblées sur les deux côtés de l'arbre rotatif.

6. Le dispositif d'entraînement de chenilles selon la revendication 1, **caractérisé par le fait que** les dents (51) sont disposées en trois rangées, et sont placées sur la paroi intérieure de la chenille en caoutchouc (50), les trois rangées de dents (51) sont respectivement les dents de la première rangée (511), les dents de la deuxième rangée (512), et les dents de la troisième rangée (513).

7. Le dispositif de conduite à chenilles selon la revendication 6, **caractérisé par le fait que** certaines dents utilisées pour le nettoyage de la boue (52) sont placées des deux côtés de la paroi intérieure de la chenille en caoutchouc (50).

8. Le dispositif d'entraînement à chenilles selon la revendication 3, **caractérisé par le fait que** le dispositif d'entraînement à chenilles comprend en outre un mécanisme de tension (60), et le mécanisme de tension (60) comprend un hydro-cylindre (61) monté sur la bielle (13) au-dessus de la roue de renvoi avant (301), et des roues de tension (62) liées en rotation à l'hydro-cylindre (61).
